(19) Europäisches Patentamt
European Patent Office
Office européen des brevets

(11) **EP 2 479 140 B1**

(12) **EUROPEAN PATENT SPECIFICATION**

(45) Date of publication and mention
of the grant of the patent:
**06.01.2016 Bulletin 2016/01**

(51) Int Cl.:
***B82B 3/00*** *(2006.01)*

(21) Application number: **10817434.3**

(22) Date of filing: **17.09.2010**

(86) International application number:
**PCT/KR2010/006378**

(87) International publication number:
**WO 2011/034365 (24.03.2011 Gazette 2011/12)**

(54) **METHOD AND APPARATUS FOR PRODUCING METAL NANOPARTICLES USING ALTERNATING CURRENT ELECTROLYSIS**

VERFAHREN UND VORRICHTUNG ZUR HERSTELLUNG VON METALLNANOPARTIKELN DURCH WECHSELSTROMELEKTROLYSE

PROCÉDÉ ET APPAREIL DE PRODUCTION DE NANOPARTICULES MÉTALLIQUES UTILISANT UNE ÉLECTROLYSE PAR COURANT ALTERNATIF

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.09.2009 KR 20090088738**

(43) Date of publication of application:
**25.07.2012 Bulletin 2012/30**

(73) Proprietor: **Amogreentech Co., Ltd.**
**Kimpo-si, Kyonggi-do 415-863 (KR)**

(72) Inventors:
• **CHOI, Min Young**
**Gimpo-si**
**Gyeonggi-do 415-030 (KR)**
• **HAN, Byung Sun**
**Gimpo-si**
**Gyeonggi-do 415-030 (KR)**
• **KIM, Tae Gyun**
**Gimpo-si**
**Gyeonggi-do 415-060 (KR)**
• **KANG, Yun Jae**
**Gimpo-si**
**Gyeonggi-do 415-060 (KR)**
• **BAE, Sung Keun**
**Gimpo-si**
**Gyeonggi-do 415-060 (KR)**
• **MOON, Ki Woong**
**Seoul 136-142 (KR)**
• **SONG, Yong Sul**
**Seoul 137-758 (KR)**

(74) Representative: **Hano, Christian et al**
**v. Füner Ebbinghaus Finck Hano**
**Patentanwälte**
**Mariahilfplatz 3**
**81541 München (DE)**

(56) References cited:
**WO-A1-2006/126808      WO-A1-2008/111735**
**KR-A- 20040 105 914      KR-A- 20060 120 716**
**KR-A- 20080 074 264      KR-B1- 100 820 038**
**KR-B1- 100 820 038**

**Description**

BACKGROUND OF THE INVENTION

Field of the Invention

The present invention relates to a method and apparatus for preparing metal nanoparticles using alternating current electrolysis, and more particularly to a method and apparatus for preparing metal nanoparticles using alternating current (AC) electrolysis, in which the yield of metal nanoparticles synthesized can be greatly improved by maintaining the concentrations of a reducing agent and a dispersing agent at constant levels in proportion to the intensity of an electric current during the synthesis of the metal nanoparticles.

Description of the Prior Art

In general, methods that are used to obtain fine metal powder include chemical methods such as co-precipitation, spraying, sol-gel processing and reverse-phase microemulsion processing, and mechanical milling methods such as ball milling and stamp milling.

For example, chemical methods that are mainly used to prepare silver nanopowder include a method in which a precipitate of silver oxide or silver hydroxide produced by neutralizing an aqueous solution of silver nitrate with an alkaline solution is reduced by a reducing agent such as hydrazine, hydrogen peroxide or formalin; a method in a precipitate of silver hydroxide produced by said neutralization reaction is reduced by blowing a gas of strong reducing power, such as hydrogen or carbon monoxide; and a method in which an aqueous solution of an alkaline amine complex is reduced by adding a reducing agent such as formalin or oxalic acid, thereby precipitating silver powder.

However, such conventional preparation methods have shortcomings in that they are not environmentally friendly because they use metal salt electrolytes as starting materials, much cost and time are required to remove hazardous materials, and it is not easy to control the particle size. In addition, such conventional methods have a shortcoming in that they are not environmentally friendly, because surfactant and additives used to particle growth caused by the agglomeration of metal particles are hazardous materials.

In conventional electrolytic methods, particles are obtained by electrolysis of electrodes made of the same metal material as the particles, using a metal salt, such as nitrate, carbonate or sulfate, as an electrolyte.

In electrolysis, the reason why hazardous metal salts are used as electrolytes to obtain metal powder in electrolysis is because metals do not dissolve in water. When a metal bonded with a strong acid salt is dissolved in water, it can be easily dissociated into ions that can be reduced by a reducing agent to yield particles.

This electrolysis method is not environmentally friendly, because hazardous materials are generated as byproducts and a hazardous gas is generated when temperature is increased Also, the size of the particles is not uniform.

Furthermore, in the conventional electrolysis methods that use metal salts such as nitrate, carbonate or sulfate, the starting materials themselves are not environmentally friendly, wastewater disposal problems arise in the neutralizing and washing processes, many washing processes need to be carried out, and a large amount of metal powder is lost in the washing processes.

Meanwhile, in mechanical methods, a method of milling silver using a ball mill or a stamp mill is widely used. However, the mechanical milling method has a fundamental limitation in obtaining fine particles and is not suitable for obtaining pure metal particles, because particles are highly likely to be contaminated.

Korean Patent Laid-Open Publication No. 10-2006-120716 discloses a method for preparing fine metal particles using pulse-type energy, which comprises dissolving alkali metal ions in water or organic solvent, placing at least two metal electrodes apart from each other in the solution, and then applying to the metal electrodes an alternating electric current, the size and direction of which change periodically with the passage of time, thereby to induce the ionization of platinum group metals and metals having a strong oxide film formed thereon, which are not ionized by electrolysis, and to reduce the ionized metals.

In the preparation method disclosed in said patent publication, the reduction of the ionized metal does not depend on electrons emitted from the cathode. Rather, an alkali metal compound (citrate-, ascorbic- or acetate-based compound) having a strong ionization tendency is dissolved in an electrolyte, whereby the alkali metal is present in a cationic state and the metal ions are reduced by receiving electrons from the metal cations.

Also, in this preparation method, a solvent that is not electrolyzed, such as alcohol or benzene, is used in order to prevent a phenomenon in which metal ions having strong oxidizing power bind with oxygen, produced during electrolysis, to form metal oxides, immediately after the metal ions have been reduced.

Meanwhile, Japanese Patent Laid-Open Publication No. Hei 4-157193 discloses a method for preparing ultrafine metal particles, which does not require a difficult production process, has low production cost, has low production cost, is simple and highly efficient, involves no incorporation of impurities and has no adverse effects on the human body.

This method comprises placing a plurality of silver electrodes and/or platinum electrodes opposite to each other in an electrolyte and applying an alternating electric current between the electrodes, thereby preparing ultrafine metal particles.

Also, in the preparation method disclosed in Japanese Patent Laid-Open Publication No. Hei 4-157193, ultrafine platinum or silver particles useful as catalysts are prepared from a metal of low ionization tendency using an aqueous solution of NaCl, KCl, $CaCl_2$, $Na_2SO_4$, $CaSO_4$, $Na_2CO_3$ or potassium acetate as an electrolyte, and the prepared fine particles have a particle size of 0.6-1.2 $\mu$m and an average particle size of 0.8 $\mu$m.

Also, according to the disclosure of Japanese Patent Laid-Open Publication No. Hei 4-157193, the frequency of the alternating electric current is generally 2-120 Hz, and preferably 10-80 Hz (however, Example 13 of the patent publication discloses that, at a frequency out of 5-100 Hz, much time is required until the ultrafine particles are produced, and that the frequency range of 20-80 Hz is preferred), and when the frequency is lower than 2 Hz or higher than 120 Hz, the efficiency of production of the ultrafine metal particles will be poor.

Furthermore, according to the disclosure of Japanese Patent Laid-Open Publication No. Hei 4-157193, the applied electric current value is determined by the electrical current and voltage of electrolyte used, but is in the range of 0.01 to 2 A. Also, according to the disclosure of the patent publication, if the electric current value is low, the efficiency of production of the ultrafine particles will be poor, and if the electric current value is high, the electrolyte will be electrically heated when an electric current is applied for a long time, so that the concentration of the electrolyte will be increased due to the evaporation of water and an excessive electric current will flow.

However, the fine particles which are prepared according to the preparation method of Japanese Patent Laid-Open Publication No. Hei 4-157193 cannot be used to manufacture a metal ink for inkjet printing which has a size ranging from few nm to a few tens of nm. Also, in Japanese Patent Laid-Open Publication No. Hei 4-157193, only whether the ultrafine particles are produced is determined and the yield of the ultrafine particles is not disclosed.

Moreover, in Korean Patent Laid-Open Publication No. 10-2006-120716 and Japanese Patent Laid-Open Publication No. Hei 4-157193, because electrolytes such as metal salts are used, additional processes, including filtration and washing, are required after the synthesis of the particles in order to remove various compounds and ions that deteriorate the properties of the particles, and the starting materials themselves are not environmentally friendly, and thus cause wastewater disposal problems.

Furthermore, the above patent publications all relate to the electrolysis method and do not suggest a method that can ensure a high yield when metal nanoparticles are produced in large amounts. Thus, these methods are not difficult to apply commercially.

Meanwhile, Korean Patent Registration No. 10-0820038 discloses a method for preparing copper nanoparticles for metal inks for inkjet printing, which is environmentally friendly without using an electrolyte such as a metal salt and is economical. This preparation method comprises dissolving a metal ion-reducing agent and a metal ion-generating agent in pure water and applying alternating electrical energy between two electrodes to precipitate copper by ionization and reduction. According to the disclosure of Korean Patent Registration No. 10-0820038, this preparation method provides uniform and stable particles, does not require additional processes such as filtration and washing after the synthesis of particles, can prepare particles in a simple and rapid manner and uses a safe process.

The above preparation method disclosed in Korean Patent Registration No. 10-0820038 has problems in that, because a commercial alternating voltage of 110-220V (that is, a sign wave voltage having a frequency of 50-60 Hz) is used, the electrolysis efficiency is very low, leading to low productivity, particles having a size ranging from several tens of nm to several hundreds of nm are found, and it is impossible to control the particle size.

Namely, the above registered Korean Patent has a problem in that, because a commercial alternating voltage consisting of a sign wave voltage of frequency of 50-60 Hz is used, the metal ions produced from the metal electrodes return back to the electrodes, thus greatly reducing productivity, although the metal ions are also reduced. Also, there are problems in that the average particle size and distribution of the copper particles are not uniform and also in that the productivity of the copper particles is reduced due to crystallization caused by the change in the polarity of the electrodes. In addition, in the above registered patent, only whether the copper nanoparticles are produced is determined and the yield of the copper nanoparticles is not disclosed.

WO 2008/111735 A1 discloses a method of producing a colloidal solution of metal nano-particles in which a pair of metal electrodes is oppositely arranged in an aqueous electrolytic solution in which metal salts are dissolved and a current is applied to the two electrodes while stirring the aqueous electrolytic solution using stirring means so that metal ions in the solution are reduced to extract metal nano-particles, and adding polysorvate to the aqueous electrolytic solution to coat the surface of metal nano-particles extracted in the solution, thereby preventing agglomeration of the metal nano-particles.

## SUMMARY OF THE INVENTION

Accordingly, the present invention has been made in view of the problems occurring in the prior art, and it is an object of the present invention to provide a method and apparatus for preparing metal nanoparticles using electrolysis, in which the yield of the metal nanoparticles can be greatly improved.

Another object of the present invention is to provide a method for preparing metal nanoparticles using electrolysis, in which metal nanoparticles of uniform shape and size can be produced in large amounts in an environmentally friendly manner.

To achieve the above objects, according to one aspect of the present invention, there is provided a method for preparing metal nanoparticles using electrolysis, the method including the steps of: dissolving an electrolyte and a dispersing agent in pure water in a reactor to prepare an electrolytic solution; placing first and second electrodes apart from each other in the electrolytic solution in the reactor, the electrodes being made of the same material as metal nanoparticles to be synthesized; applying alternating current at the first and second electrodes to ionize the metal of the first and second electrodes in the electrolytic solution; and introducing into the electrolytic solution a reducing agent according to the concentration of metal ions produced, thereby synthesizing metal nanoparticles.

The amount of metal ions produced is determined by the intensity of the alternating current, and thus the amount of reducing agent introduced is preferably set at (integral value of intensity (A) of electric current) x 2 mmol/h to (integral value of intensity (A) of electric current) x 4 mmol/h, based on 1 liter of pure water.

The reducing agent may be one or more selected from the group consisting of hydrazine ($N_2H_4$), sodium hypophosphite ($NaH_2PO_2$), sodium borohydride ($NaBH_4$), dimethylamine borane (DMAB; $(CH_3)_2NHBH_3$), formaldehyde (HCHO), and ascorbic acid.

Furthermore, the amount of dispersing agent added is preferably set at (integral value of intensity (A) of electric current x (1.0) x reaction time to (integral value of intensity (A) of electric current) x (1.5) x reaction time, based on 1 liter of pure water.

The dispersing agent that is used in the present invention may be a water-soluble polymeric dispersing agent or a water-dispersible polymeric dispersing agent. Also, the dispersing agent may be one or more selected from the group consisting of Disperbyk™-111, Byk™-154, Disperbyk™-180, Disperbyk™-182, Disperbyk™-190, Disperbyk™-192, Disperbyk™-193, Disperbyk™-2012, Disperbyk™-2015, Disperbyk™-2090 and Disperbyk™-2091, which are commercially available from BYK Chemie; Tego™715w, Tego™735w, Tego™740w™, Tega™745w™, Tego™750w, Tego™755w and Tego™775w, which are commercially available from Evonik; Solsperse™ 20000, Solsperse™ 43000 and Solsperse™ 44000, which are commercially available from Lubrizol; EFKA™ 4585 commercially available from Ciba; Orotan™ 731A and Orotan™ 1124, which are commercially available from Dow; Tween 20 and Tween 80, which are commercially available from Aldrich; polyethylene glycol (PEG) 200, polyvinylpyrrolidone (PVP) 10,000, PVP 55,000, poloxamer 407, and poloxamer 188.

Also, the electrolytic solution that is used in the present invention preferably contains a mixture of an acidic electrolyte and a basic electrolyte and is set at a pH of 7-9. In this case, the electrolyte is preferably a mixture of citric acid and hydrazine.

The electrolyte that is used in the present invention may be one or more selected from the group consisting of nitric acid, formic acid, acetic acid, citric acid, tartaric acid, glutaric acid, hexanoic acid, alkali metal salts of said acids, amines, including ammonia ($NH_3$), triethyl amine (TEA) and pyridine, and amino acids.

The frequency (f) of the alternating current power is preferably O<f<10 Hz, and more preferably $0.1 \leq f \leq 5$ Hz, in view of yield, particle size and particle size distribution. Also, the frequency (f) of the alternating current power is most preferably $0.1 \leq f \leq 1$ Hz in view of the growth of particles in addition to yield, particle size and particle size distribution.

Moreover, the first and second electrodes may be made of one or an allow of two or more selected from the group consisting of Ag, Pt, Au, Mg, Al, Zn, Fe, Cu, Ni, and Pd.

According to another aspect of the present invention, there is provided an apparatus for preparing metal nanoparticles using electrolyte, the apparatus including: a reactor in which an electrolytic solution is received; first and second electrodes which are placed apart from each other and made of the same material as metal nanoparticles to be obtained; a power supply for applying alternating current power between the first and second electrodes so as to perform an electrolytic reaction; and a reducing agent supply means serving to introduce the reducing agent into the electrolytic solution so as to maintain the concentration of the reducing agent at a constant level according to the concentration of metal ions produced when the electrolytic reaction is performed by application of the alternating current power.

The amount of metal ions produced is determined by the intensity of the electric current of alternating current power that is applied between the first and second electrodes, and the intensity of the electric current can be adjusted by the concentration of the electrolyte and the voltage that is applied between the first and second electrodes.

BRIEF DESCRIPTION OF THE DRAWINGS

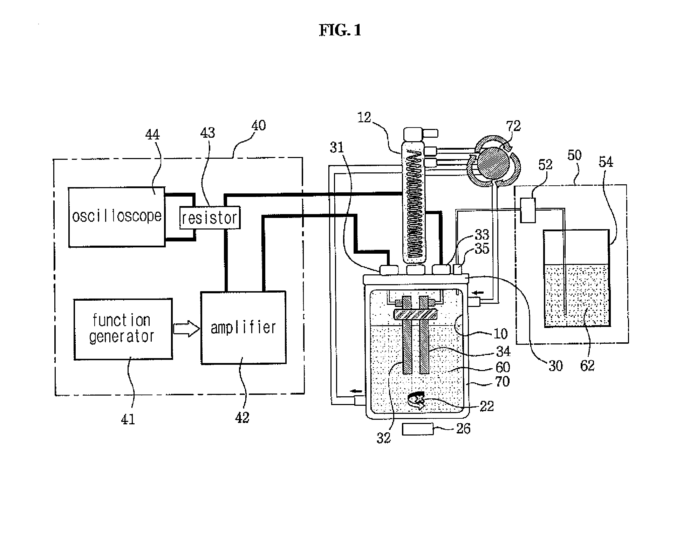

FIG. 1 is a schematic diagram showing the structure of an apparatus for preparing metal nanoparticles using electrolysis according to the present invention.

DETAILED DESCRIPTION OF THE INVENTION

Hereinafter, the present invention will be described in further detail with reference to preferred embodiments and the accompanying drawing.

In the following description, the structure of an apparatus for preparing metal nanoparticles according to the present invention will be first described.

FIG. 1 is a schematic view showing the structure of the apparatus for preparing metal nanoparticles according to the present invention.

Referring to FIG. 1, the apparatus for preparing metal nanoparticles according to the present invention comprises a reactor 10 and a heater 26 for indirectly heating an electrolytic solution 60, disposed below the reactor 10. On the outside of the reactor 10, a circulation-type water-cooled cooling jacket 70 is disposed which allows cooling water supplied from a cooling means 72 to flow so as to maintain the temperature of the electrolytic solution 60 at a constant level.

In the reactor 10, the electrolytic solution 60 obtained by mixing pure water, preferably ultrapure water (DI water), with additives, is filled, and in the electrolytic solution 60, first and second electrodes 32 and 34 made of the same metal material as metal nanoparticles to be synthesized are placed apart from each other.

The first and second electrodes 32 and 34 may have a plate shape as shown in FIG. 1 or may also have a cylindrical rod shape or other shapes. The first and second electrodes 32 and 34 may be made of any material that can release metal ions, such as silver (Ag), copper (Cu), nickel (Ni), gold (Au), palladium (Pd), platinum (Pt) or the like.

The reactor 10 includes a stirrer for stirring the electrolytic solution 60. The stirrer may adopt a structure in which a magnet piece 22 disposed in the reactor 10 is rotated by a driving means (not shown) disposed outside the reactor 10.

Also, an electrode support housing 30 for supporting the first and second electrodes 32 and 34 is coupled to the upper end of the reactor 10. The electrode support housing 30 supports the first and second electrodes 32 and 34 in an insulated state while it is connected with the first and second electrodes 32 and 34. To a first terminal 31 and a second terminal 33 which are exposed to the outside of the reactor, a power supply 40 for supplying alternating current (AC) power required for electrolysis are connected.

The power supply 40 includes, for example, a function generator 41 capable of selecting the waveform and frequency of AC power required for electrolysis, and an amplifier 42 for amplifying the current or voltage of AC power generated from the function generator 41. The output of the amplifier 42 is connected to the first terminal 31 and the second terminal 33.

However, as the power supply 40 in the present invention, any power supply may be used, as long as it can supply AC power, which has a present waveform and frequency and can be previously set at a current or voltage of desired magnitude. Also, in the present invention, a constant current source can be provided in the power supply, such that a current of constant current can be supplied between the first and second electrodes 32 and 34 during electrolysis.

Examples of the waveform of AC power which can be used in the present invention include all waveforms, such as sine waves, square waves, triangle waves and saw tooth waves. Such waveforms show only a slight difference in the yield and shape of metal nanoparticles produced.

The frequency of AC power applied has a great effect on the yield, shape, size and distribution of metal nanoparticles produced and is preferably $0 < f < 10$ Hz, and more preferably $0.1 \leq f \leq 5$ Hz. Also, it is most preferably $0.1 \leq f \leq 1$ Hz in view of yield, particle size distribution and the growth of particles. The detailed description of the frequency will be given later.

Moreover, the power supply 40 includes an oscilloscope 44 connected with a resistor 43, such that the waveform and magnitude of AC power applied to the first and second electrodes 32 and 34 can be determined.

Meanwhile, on the electrode support housing 30, a reducing agent inlet 35 for introducing a reducing agent into the reactor from the outside is provided. The reducing agent inlet 35 is connected to a reducing agent supply means 50 for supplying a reducing agent 62 at a constant rate, such that the concentration of the reducing agent is maintained at a preset constant level during electrolysis. The reducing agent supply means 50 includes a reducing agent tank 54 for storing the reducing agent 62, and a pump 52 disposed between the reducing agent tank 54 and the reducing agent inlet 35 to supply the reducing agent 62 at a constant rate.

Also, on the electrode support housing 30, a cooling tower 12 for cooling steam produced during electrolysis and sending the cooled steam back to the reactor 10 is disposed. In the cooling tower 12, cooling water supplied from the cooling means 72 is circulated to condense steam.

The method for preparing metal nanoparticles using electrolysis according to the present invention can be carried out using the above-described electrolytic apparatus and comprises the steps of: dissolving a dispersing agent and an electrolyte in ultrafine water (DI water) in the reactor 10 to prepare an electrolytic solution 60; placing the first and second electrodes 32 and 34 apart from each other in the electrolytic solution 60, the electrodes being made of the same metal material as nanoparticles to be synthesized; ionizing the metal of the first and second electrodes 32 and 34 in the electrolytic solution according to an electrolytic process of applying AC power having a given frequency (f) between the first electrode 32 and the second electrode 34; and reducing the metal ions by the reducing agent 62 to form metal nanoparticles.

In the present invention, the electrolytic solution 60 contains an electrolyte, a reducing agent and a dispersing agent as additives to pure water, preferably ultrapure water.

The electrolyte that is used in the present invention may be one or more selected from the group consisting of acids, including nitric acid, formic acid, acetic acid, citric acid, tartaric acid, glutaric acid and hexanoic acid, alkali metal salts of said acids, amines, including ammonia ($NH_3$), triethyl amine (TEA) and pyridine, and amino acids.

Particularly, the electrolyte that is used in the present invention may be citric acid which is environmentally friendly. If necessary, amino acid such as glycine may also be used.

Also, the reducing agent that is used in the present invention may be one or more selected from the group consisting of hydrazine ($N_2H_4$), sodium hypophosphite ($NaH_2PO_2$), sodium borohydride ($NaBH_4$), dimethylamine borane (DMAB; $(CH_3)_2NHBH_3$), formaldehyde (HCHO), and ascorbic acid.

As the reducing agent, an environmentally friendly reducing agent, for example, an organic reducing agent such as hydrazine, is preferably used. Because this organic reducing agent is completely consumed by producing nitrogen gas and water during the electrolytic reaction, it is not hazardous after it does not become hazardous after completion of the reaction.

As described above, according to the present invention, metal nanoparticles can be obtained in an environmentally friendly and simple manner by using an environmentally friendly electrolyte and an organic reducing agent in pure water (DI water) without using an environmentally hazardous electrolyte.

Meanwhile, the dispersing agent serves to cap the surface of metal nanoparticles so as to prevent a phenomenon in which, after ionized metal ions dissociated from the first and second electrodes 32 and 34 by electrolysis have been reduced by a reducing agent, the reduced metal nanoparticles return and adhere to the electrodes or precipitate by the agglomeration thereof. As the dispersing agent, a water-soluble polymeric dispersing agent or a water-dispersible polymeric dispersing agent may be used.

As the water-soluble polymeric dispersing agent, a polyacryl-, polyurethane- or polysiloxane-based, water-soluble polymeric dispersing agent may be used, and as the water-dispersible polymeric dispersing agent, a polyacryl-, polyurethane- or polysiloxane-based, water-dispersible soluble polymeric dispersing agent may be used.

The dispersing agent may be one or more selected from the group consisting of Disperbyk™-111, Byk™-154, Disperbyk™-180, Disperbyk™-182, Disperbyk™-190, Disperbyk™-192, Disperbyk™-193, Disperbyk™-2012, Disperbyk™-2015, Disperbyk™-2090 and Disperbyk™-2091, which are commercially available from BYK Chemie; Tego™715w, Tego™735w, Tego™740w™, Tego™745w™, Tego™750w, Tego™755w and Tego™775w, which are commercially available from Evonik; Solsperse™ 20000, Solsperse™ 43000 and Solsperse™ 44000, which are commercially available from Lubrizol; EFKA™ 4585 commercially available from Ciba; Orotan™ 731A and Orotan™ 1124 which are commercially available from Dow; Tween 20 and Tween 80 which are commercially available from Aldrich; polyethylene glycol (PEG) 200, polyvinylpyrrolidone (PVP) 10,000, PVP 55,000, poloxamer 407 and poloxamer 188.

As used herein, the term "DI water" refers to tripe-distilled water containing little or no anions and cations that exist in tap water or spring water. If anions and cations in addition to the electrolyte and the reducing agent are included during the preparation of metal nanoparticles, impurities can occur in metal nanoparticles, and complex compounds can be produced, thus making it impossible to obtain metal nanoparticles.

In the preparation of metal nanoparticles by electrolysis according to the present invention, metal nanoparticles having a uniform shape, a desired size (less than 100 nm) and a narrow particle size distribution can be produced in a high yield by adjusting the concentrations of the dispersing agent and the reducing agent in a specific frequency range according to the intensity of the electric current of AC power.

Hereinafter, electrolytic conditions showing a high yield, a desired particle size and a narrow particle size distribution will be described in detail.

In the present invention, the reducing agent, the dispersing agent and the electrolyte, which are added to the electrolytic solution, and the electric current value, are set as follows.

Generally, the preparation of metal nanoparticles by an electrolytic method is not achieved by determining the amount of metal particles to be obtained, placing, in a reactor, metal ions in an amount determined according to initial reaction conditions, and performing the reaction of the metal ions, as in a chemical method, but rather is achieved by producing metal ions from metal electrodes continuously with the passage of time and reducing the produced ions by a reducing agent. As a result, the produced metal nanoparticles can return back to the electrodes during the reduction reaction due to the polarity of the electrodes and the interaction between the nanoparticles. This phenomenon becomes the biggest problem in terms of yield (i.e., productivity).

In the preparation of metal nanoparticles by electrolysis, in order to solve this productivity problem, the concentration of the reducing agent for reducing metal ions produced by the application of electrical energy needs to be maintained at a suitable level according to the concentration of the metal ions.

In this case, the amount of metal ions produced is determined by the intensity of the electric current of AC power applied between the two electrodes, and the intensity of the electric current can be adjusted by the concentration of the electrolyte and the voltage applied to the electrodes. The results of studies conducted by the present inventors revealed that, when the concentration of the reducing agent is maintained at a constant level in view of the concentration of metal ions that are produced by an electric current of given intensity (electric current value), the yield of metal nano-particles is high.

The reason therefor is as follows. If metal ions are produced at a concentration higher than the concentration of the reducing agent, the amount of the reducing agent will be relatively insufficient, so that the reduction rate of the metal ions will be relatively decreased, but this decrease does not cause a significant problem in terms of yield. However, if the amount of the reducing agent is relatively insufficient, the size of particles will be undesirably increased. On the other hand, the concentration of metal ions produced is excessively higher than the concentration of the reducing agent, the reduction rate of the metal ions will be excessively increased, so that particles of less than a few nm in size will be produced and return back to the electrodes before they are capped with the dispersing agent, thereby rapidly reducing yield.

Accordingly, because the amount of metal ions produced is proportional to the intensity of electric current of AC power applied, the amount of reducing agent introduced for maintaining the concentration of the reducing agent at a constant level according to the concentration of metal ions produced should be determined in proportion to the intensity of the electric current. In this case, the intensity of the electric current can be adjusted by a voltage that is applied to both ends of the two electrode.

In the present invention, the amount of reducing agent introduced for maintaining the concentration of the reducing agent at a constant level is in the range of (integral value of intensity (A) of electric current) x 2 mmol/h (integral value of intensity (A) of electric current) x 4 mmol/h, based on 1 liter of pure water.

Also, the dispersing agent serves to prevent already produced nanoparticles from being returning to the electrodes due to their electrolytic reactivity, and thus it makes the concentration of the reducing agent suitable. Even though the dispersing agent makes the concentration of the reducing agent suitable, if it does not protect the produced metal nanoparticles, the metal nanoparticles will return back to the electrodes such that they will be plated thereon, thereby greatly reducing productivity.

Although the amount of dispersing agent added has no great effect on yield, it influences the size and distribution of nanoparticles produced. The preferred amount of dispersing agent added is set as follows on the basis of 1 liter of pure water:

$$\text{Amount of dispersing agent added} = \text{(integral value of intensity (A) of electric current}$$
$$\text{of AC power)} \times (1.0 \text{ to } 1.5) \times \text{(reaction time)}$$

The more preferred amount of dispersing agent added corresponds to an integral ratio of 1.3 times the intensity (A) of the electric current at a reaction time of 1 hour on the basis of 1 liter of pure water.

Herein, if the amount (g) of dispersing agent added is less than 1.0 time the integral value of the intensity (A) of the electric current of AC power, the produced particles will become larger to cause precipitation, and the particle size distribution will widen, and if the amount (g) of dispersing agent added is more than 1.5 time the integral value of the intensity (A) of the electric current of AC power, a large amount of the dispersing agent will remain in the electrolytic solution, such that the number of washing processes for removing the dispersing agent during the manufacture of, for example, conductive ink, will be undesirably increased.

Furthermore, the type and concentration of electrolyte have a direct connection with pH and the intensity of an electric current. Generally, electrolytes are classified into an acidic electrolyte, a basic electrolyte and a neutral electrolyte. In the case in which only the acidic electrolyte having a pH of less than 7 is used, if hydrazine, a weak alkali, is added as a reducing agent, it will undergo an acid-base reaction with the acidic electrolyte. For this reason, hydrazine that is a weak alkali should be added in a sufficient amount, such that the reduction reaction rate can be controlled to control the size of particles.

On the other hand, if only the basic electrolyte is added, the reaction solution will have a pH of more than 7, and thus the movement of electrons in the reaction solution will increase and the reaction rate of the weak alkali hydrazine that is used as the reducing agent will increase, whereby a phenomenon will occur in which particles of a few nm in size are produced and return to the electrodes before they are protected with the dispersing agent.

In view of this point, in the present invention, a mixture of an acidic electrolyte and a basic electrolyte is used and set at a pH of 7-9.

Also, with respect to the relationship between the pH of the reaction solution and the concentration of the reducing solution, if the pH of the reaction solution is less than 7, the reaction rate of the reducing agent hydrazine will decrease. The reason therefor is that, because hydrazine is a weak alkali, it reacts with the electrolyte citric acid, so that it participates in an acid-base reaction rather than a reduction reaction until the pH reaches the neutral range. This causes a reduction in the reducing ability of hydrazine.

Thus, because the reduction reaction occurs after the acid-base reaction has occurred, the amount of hydrazine that participates in the reduction reaction with metal ions is actually smaller than the amount of hydrazine added to the reactor, and the reduction reaction is delayed, thus increasing the size of metal particles. Namely, the amount of reducing agent added becomes smaller than the lower limit of the preferred range and does not cause a significant problem in terms of yield, but a phenomenon occurs in which the size of particles increases to several hundreds of nm or more.

If a dispersing agent having dispersibility is used and the concentration of a reducing agent is maintained at a constant level in proportion to the concentration of metal ions produced at a pH between 7 and 9, the reduction reaction rate will be maintained at a relatively constant level, so that the yield (i.e., productivity) of particles will greatly increase.

Meanwhile, in the preparation of metal nanoparticles by electrolysis, another factor influencing the yield of nanoparticles is the frequency (f) of AC power. In the present invention, the frequency (f) of AC power is preferably $0 < f < 10$ Hz, and more preferably $0.1 \leq f \leq 5$ Hz. Also, it is most preferably $0.1 \leq f \leq 1$ Hz in view of yield, particle size distribution and the growth of particles.

If the frequency of power is 0 Hz, that is, a direct current (DC), there will be problems in that metal ions are oxidized on the positive electrode, and non-oxidized metal ions move to the negative electrode by an electric field before being reduced by the reducing agent, so that they meet electrodes released from the negative electrode and are reduced to a metal on the surface of the negative electrode, whereby the metal particles grow to the micrometer size, and thus the yield of desired metal nanoparticles is reduced.

Also, the frequency (f) of AC power is higher than 10 Hz, there will be problems in that the yield of nanoparticles is rapidly decreased and some grown particles are also found.

When the frequency of AC power is changed from 100 Hz to 0.1 Hz, the distribution degree and particle size of the metal nanoparticles are decreased as the frequency is decreased from 100 Hz to 10 Hz. Particularly, when the frequency is decreased from 10 Hz to 0.1 Hz, the distribution degree and particle size of the metal nanoparticles are also decreased.

The reason why this phenomenon occurs is as follows. As the frequency becomes higher, the polarity of the two electrodes is gradually rapidly changed, so that the produced ions are attracted to the negative electrode and plated thereon, before they participate in a reduction reaction. Namely, the metal ions produced from the positive (+) electrode instantaneously react with the reducing agent, so that they return to the electrode being changed from the positive (+) polarity to the negative (-) polarity, before they are reduced into metal nanoparticles.

On the contrary, as the frequency becomes lower, the phenomenon in which the produced metal ions return to the negative (-) electrode is significantly reduced, and thus the yield of nanoparticles produced is increased.

As described above, in the present invention, the production of metal nanoparticles having a uniform shape, a desired size (less than 100 nm, preferably less than 20 nm) and a narrow particle size distribution (uniform particle size) can be achieved by adjusting the concentrations of the dispersing agent and the reducing agent in the specific frequency range of AC power according to the intensity of the electric current of AC power.

Hereinafter, the features of the present invention will be described in further detail with reference to examples, but the scope of the present invention is not limited to these examples.

In Experimental Examples 1 to 5 below, in order to examine the characteristics of nanoparticles according to the concentration of the reducing agent, electrolysis was carried out while changing the amount of reducing agent hydrazine added.

Experimental Example 1

As shown in FIG. 1, the first and second electrodes made of silver were placed apart from each other in the reactor. Then, 2.0 mmol of citric acid as an electrolyte and 6.0 mmol of hydrazine as an electrolyte were added to 1 liter of ultrapure water (DI water) in the reactor, and 8.0 g of the dispersing agent Disperbyk™-190 (BYK Chemie) was added to the reactor. Then, the additives added to the reactor were stirred with a stirrer until they were completely dissolved.

The aqueous solution obtained by completely dissolving the additives was heated to 90 °C, and then maintained at the set temperature by allowing cooling water to flow around the reactor. In this state, electrolysis was carried out by applying a sign-wave AC power of frequency of 1 Hz between the first and second electrodes while setting the electric current value at 4.3 A. Also, the electrolysis was carried out for 1 hour and 30 minutes while introducing 9.0 mmol of the reducing agent hydrazine at a constant rate using the pump.

After completion of the electrolytic reaction, the consumption of the silver electrodes was measured, and silver nanoparticles present in the reaction solution were analyzed with a field emission-scanning electron microscope (FE-SEM). As a result, it could be observed that most of the nanoparticles showed a wide particle size distribution of 12-80 nm and that a large amount of precipitation occurred.

Experimental Example 2

In Experimental Example 2, an electrolytic reaction was carried out in the same manner as in Experimental Example 1, except that the amount of reducing agent hydrazine added was increased to 13.5 mmol. After completion of the electrolytic reaction, the consumption of the silver electrodes was measured, and silver nanoparticles present in the resulting aqueous solution were analyzed by an FE-SEM. As a result, it could be observed that the obtained silver nanoparticles mostly had a relatively narrow particle size distribution of 12-60 nm and that a small amount of precipitation occurred.

Experimental Example 3

In Experimental Example 3, an electrolytic reaction was carried out in the same manner as in Experimental Example 1, except that the amount of reducing agent hydrazine added was increased to 18.00 mmol. After completion of the electrolytic reaction, the consumption of the silver electrodes was measured, and silver nanoparticles present in the resulting aqueous solution were analyzed by an FE-SEM. As a result, it could be seen that the obtained silver nanoparticles mostly showed a very narrow particle size distribution of 12-20 nm and also that little or no precipitation was found.

Experimental Example 4

In Experimental Example 4, an electrolytic reaction was carried out in the same manner as in Experimental Example 1, except that the amount of reducing agent hydrazine added was increased to 24.00 mmol. After completion of the electrolytic reaction, the consumption of the silver electrodes was measured, and silver nanoparticles present in the resulting aqueous solution were analyzed by an FE-SEM. As a result, it could be seen that the obtained silver nanoparticles mostly showed a very narrow particle size distribution of 12-20 nm and also that little or no precipitation was found.

Experimental Example 5

In Experimental Example 5, an electrolytic reaction was carried out in the same manner as in Experimental Example 1, except that the amount of reducing agent hydrazine added was increased to 36.00 mmol. After completion of the electrolytic reaction, the consumption of the silver electrodes was measured, and silver nanoparticles present in the resulting aqueous solution were analyzed by an FE-SEM. As a result, the obtained silver nanoparticles mostly showed a very narrow particle size distribution of 12-20 nm.

The above experimental results are summarized in Table 1 below.

[Table 1] Characteristics of nanoparticles according to the concentration of reducing agent

| No. | Intensity of current (A) | Reaction time (h) | Dispersing agent (g) | Amount of reducing agent added (mmol/h) | Consumption of silver electrodes (g) | Precipitation | Particle size distribution |
|---|---|---|---|---|---|---|---|
| Experimental Example 1 | 4.3 | 1.5 | 8.0 | 6.00 | 12.99 | large amount of precipitation | very wide |
| Experimental Example 2 | | | | 9.00 | 13.02 | small amount of precipitation | narrow |
| Experimental Example 3 | | | | 12.00 | 13.92 | little or no precipitation | very narrow |
| Experimental Example 4 | | | | 16.00 | 12.98 | little or no precipitation | very narrow |
| Experimental Example 5 | | | | 24.00 | 6.85 | little or no precipitation | very narrow |

As can be seen in Table 1 above, in Experimental Examples 2 to 4 of the present invention, the consumption of the silver electrodes was large while a small amount of precipitation occurred or little or no precipitation occurred, suggesting that the yield of the nanoparticles was high. Also, the particle size distribution of the obtained nanoparticles satisfied the level required in the present invention.

However, in Experimental Example 1, the consumption of the silver electrodes was sufficient, but a large amount of precipitation in the reactor occurred, thus greatly reducing the yield of the nanoparticles, and the ratio of particles having a very large size was relatively high, suggesting a wide particle size distribution. The reason therefor is because the amount of reducing agent added was insufficient so that the size of particles became larger.

Meanwhile, in Experimental Example 5, because the reducing agent was added in an excessive amount, the reduction rate was excessively increased, so that particles of a few nm or less were produced and returned back to the electrodes before capped with the dispersing agent, thereby rapidly reducing the yield of the nanoparticles. Namely, the amount of excessively fine nanoparticles was increased, and such fine nanpoparticles moved to the silver electrodes during the electrolytic reaction and were attached to the electrodes, so that the consumption of the silver electrodes was rapidly decreased, thereby reducing the yield of the nanoparticles.

As can be seen from the above-described results, it is preferable in view of the consumption of the silver electrodes which is the measure of the yield of nanoparticles that the amount of reducing agent added according to the present invention be 2 mmol/h to 4 mmol/h when the intensity of electric current applied between two electrodes is set at 1 A.

Meanwhile, in Experimental Examples 6 to 9, in order to determine the optimal method of introducing the reducing agent, electrolysis was carried out while only the method of introducing the reducing agent was changed and electrolysis was carried out under the same conditions as Experimental Example 1.

Experimental Example 6 (introduction only at the initial stage)

In Experimental Example 6, 2.0 mmol of citric acid as an electrolyte, 24.0 mmol of hydrazine as an electrolyte and reducing agent and 8.0 g of Disperbyk™-190 (BYK Chemie) as a dispersing agent were added to and dissolved in 1 liter of ultrapure water (DI water) in the reactor to prepare an electrolytic solution. Then, an electrolytic reaction was carried out under the same conditions as Experimental Example 1.

After completion of the electrolytic reaction, the consumption of the silver electrodes was measured, and silver nanoparticles present in the reaction solution was analyzed by an FE-SEM. As a result, it was found that, when the reducing agent was added only at the initial stage, the obtained silver nanoparticles contained a large amount of particles larger than sub-micron size, for example, particles of more than 500 nm.

Experimental Example 7 (additional introduction after 45 minutes)

In Experimental Example 7, 2.0 mmol of citric acid as an electrolyte, 15.0 mmol of hydrazine as an electrolyte and reducing agent and 8.0 g of Disperbyk™-190 (BYK Chemie) as a dispersing agent were added to and dissolved in 1 liter of ultrapure water (DI water) in the reactor to prepare an electrolytic solution. An electrolytic reaction was carried out for 45 minutes, and then 9.0 mmol of hydrazine was additionally introduced, followed by carrying out an electrolytic reaction for 45 minutes. Thus, the electrolytic reaction was carried out for a total of 90 minutes. Other electrolytic reaction conditions were the same as those in Experimental Example 6.

After completion of the electrolytic reaction, the consumption of the silver electrodes was measured, and silver nanoparticles present in the reaction solution was analyzed by an FE-SEM. As a result, it was found that the obtained silver nanoparticles contained a large amount of particles larger than sub-micron size, for example, rod-shaped particles of about 500 nm.

Experimental Example 8 (2 additional introductions of after 30 minutes)

In Experimental Example 8, 2.0 mmol of citric acid as an electrolyte, 12.0 mmol of hydrazine as an electrolyte and reducing agent and 8.0 g of Disperbyk™190 (BYK Chemie) as a dispersing agent were added to and dissolved in 1 liter of ultrapure water (DI water) in the reactor to prepare an electrolytic solution. An electrolytic reaction was carried out for 30 minutes, and then 6.0 mmol of hydrazine was additionally introduced twice at a 30-minute interval (a total of 12.0 mmol of hydrazine was introduced), followed by carrying out an electrolytic reaction for 30 minutes after each introduction. Thus, the electrolytic reaction was carried out for a total of 90 minutes. Other electrolytic reaction conditions were the same as those in Experimental Example 6.

After completion of the electrolytic reaction, the consumption of the silver electrodes was measured, and silver nanoparticles present in the reaction solution was analyzed by an FE-SEM. As a result, it could be seen that the obtained silver nanoparticles contained particles of 50-150 nm and rod-shaped particles.

Experimental Example 9 (introduction at constant concentration)

In Experimental Example 9, 2.0 mmol of citric acid as an electrolyte, 2.0 mmol of hydrazine as an electrolyte and 8.0 g of Disperbyk™-190 (BYK Chemie) as a dispersing agent were added to and dissolved in 1 liter of ultrapure water (DI water) in the reactor to prepare an electrolytic solution, in the same manner as in Experimental Example 3. Then, an electrolytic reaction was carried out for 1 hour and 30 minutes.

While the electrolytic reaction was carried out for 1 hour and 30 minutes, 18.0 mmol of hydrazine as a reducing agent was introduced at a constant rate using the pump. Other electrolytic reaction conditions were the same as those in Experimental Example 6.

After completion of the electrolytic reaction, the consumption of the silver electrodes was measured, and silver nanoparticles present in the reaction solution was analyzed by an FE-SEM. As a result, it could be seen that the obtained silver nanoparticles mostly had a size of 12-20 nm and showed a very narrow particle size distribution.

The above experimental results are shown in Table 2 below.

[Table 2] Characteristics of nanoparticles according to method of introducing reducing agent

| No. | Intensity of current (A) | Reaction time (h) | Dispersing agent (g) | Method of introducing reducing agent (mmol) | Consumption of silver electrodes (g) | Particle size (nm) | Particle size distribution |
|---|---|---|---|---|---|---|---|
| Experimental Example 6 | 4.3 | 1.5 | 8.0 | Introducing 24.00 mmol of hydrazine as electrolyte and reducing agent only at initial stage | 13.93 | Containing a large number of particles larger than sub-micron size. | Very wide |
| Experimental Example 7 | | | | Introducing 15.00 mmol of hydrazine as electrolyte and reducing agent at initial stage, after 45 minutes, introducing 9.0 mmol of hydrazine, followed by electrolytic reaction for 45 minutes | 11.89 | Containing rod-shaped particles of more than 200 nm | Wide |
| Experimental Example 8 | | | | Introducing 12.00 mmol of hydrazine as electrolyte and reducing agent only at initial stage, and then introducing 6.0 mmol of hydrazine twice at 30-min interval, and carrying out electrolytic reaction after each introduction. | 5.86 | Containing rod-shaped particles of 50-150 nm, | Wide |
| Experimental Example 9 | | | | Introducing reducing agent at constant concentration of 12 mmol/h. | 14.01 | 12-20nm | Very narrow |

As can be seen in Table 2 above, when comprehensively considering the yield, particle size and particle size distribution of Experimental Examples 6 to 9, the method of introducing the reducing agent so as to be maintained at a constant concentration showed the best results.

Experimental Examples 10 to 13

In Experimental Examples 10 to 13, the amount of dispersing agent added in Experimental Example 9 was changed as shown in Table 3 while observing the characteristics of nanoparticles.

[Table 3] Characteristics of nanoparticles according to concentration of dispersing agent

| No. | Intensity of current (A) | Reaction time (h) | Dispersing agent (g) | Amount of reducing agent (mmol/h) | Consumption of silver electrode (g) | Particle size (nm) and particle size distribution | Remarks |
|---|---|---|---|---|---|---|---|
| Experimental Example 10 | 4.3 | 1.5 | 4 | 12 | 13.65 | Containing particles larger than sub-micron size | Production of excessive amount of precipitation |
| Experimental Example 11 | | | 6 | | 13.05 | Mostly 12m-200nm | Production of small amount of precipitation |
| Experiment Example 12 | | | 8 | | 13.88 | 12-20nm; Narrow particle size distribution | No precipitation |
| Experimental Example 13 | | | 10 | | 14.32 | 15-30nm; narrow particle size distribution | No precipitation |

As can be seen in Table 3 above, in Experimental Example 10 in which 4 g of the dispersing agent was added, the consumption of the silver electrodes after the electrolytic reaction was 13.65 g, and the silver nanoparticles present in the obtained aqueous solution were rod-shaped particles, as analyzed by an FE-SEM.

In Experimental Example 11 in which 6 g of the dispersing agent was added, the consumption of the silver electrodes after the electrolytic reaction was 13.05 g, and the silver nanoparticles present in the obtained aqueous solution were mostly present as nanoparticles of 20 nm in size, as analyzed by an FE-SEM.

In Experimental Example 12 in which 8 g of the dispersing agent was added, the consumption of the silver electrodes after the electrolytic reaction was 13.92 g, and the silver nanoparticles present in the obtained aqueous solution had a very narrow particle size distribution of 12-20 nm, as analyzed by an FE-SEM.

In Experimental Example 13 in which 10 g of the dispersing agent was added, the consumption of the silver electrodes after the electrolytic reaction was 14.32 g, and the silver nanoparticles present in the obtained aqueous solution had a very narrow particle size distribution of 12-30 nm, as analyzed by an FE-SEM.

As can be seen in the results of the above experiments on the concentration of the dispersing agent, when the dispersing agent is added in an amount corresponding to an integral ratio of 1.0-1.5 times the integral value of the intensity (rms; A) of electric current applied per unit time (hr), the size and particle size distribution of nanoparticles can be obtained in desired ranges. Also, it can be seen that the most preferred amount of dispersing agent added is an amount corresponding to an integral ratio of 1.3 times the integral value of the intensity (A) of an electric current when the reaction time is 1 hour.

Experimental Examples 14 to 20

In Experimental Examples 14 to 20, the change in yield according to the change in the frequency (f) of AC power was measured, and the results of the measurement are shown in Table 4 below.

In Experimental Examples 14 to 17 in which the frequency (f) of AC power was set at each of 0.1, 0.5, 1 and 5 Hz, the consumptions of the silver electrodes after the electrolytic reaction were 15.31, 14.43, 13.92 and 8.90 g, respectively. The silver nanoparticles present in the aqueous solutions obtained in Experimental Examples 14 to 16 were analyzed by an FE-SEM and, as a result, it could be seen that the silver nanoparticles had a very uniform and narrow particle size distribution of 12-20 nm, Also, the silver nanoparticles present in the aqueous solution obtained in Experimental Example 17 mostly had a very uniform and narrow particle size distribution of 12-20 nm, and some grown particles were also found.

In Experimental Example 18 in which the frequency (f) of AC power was set at 10 Hz, the consumption of the silver electrodes after the electrolytic reaction was 6.89 g. The silver nanoparticles present in the obtained aqueous solution were analyzed by an FE-SEM and, as a result, the silver nanoparticles mostly had a very uniform size of 12-20 nm, and some grown particles were also found.

In Experimental Example 19 in which the frequency (f) of AC power was set at 20 Hz, the consumption of the silver electrodes after the electrolytic reaction was 5.53 g. The silver nanoparticles present in the obtained aqueous solution were analyzed by an FE-SEM and, as a result, the silver nanoparticles mostly had a very uniform size of 12-20 nm, and a large number of grown particles were also found.

In Experimental Example 20 in which the frequency (f) of AC power was set at 30 Hz, the consumption of the silver electrodes after the electrolytic reaction was 4.57 g. The silver nanoparticles present in the obtained aqueous solution were analyzed by an FE-SEM and, as a result, the silver nanoparticles mostly had a very uniform size of 12-20 nm, and a large number of grown particles were also found.

[Table 4] Preparation of nanoparticles according to the frequency of AC power

| No. | Intensity of current (A) | Reaction time (h) | Dispersing agent (g) | Amount of reducing agent (mmol/h) | Frequency (Hz) | Consumption of silver electrodes (g) | Particle size (nm) and particle size distribution | Remarks |
|---|---|---|---|---|---|---|---|---|
| Experimental Example 14 | 4.3 | 1.5 | 8 | 12 | 0.1 | 15.31 | 12-20nm, narrow particle size distribution | |
| Experimental Example 15 | | | | | 0.5 | 14.43 | 12-20nm, narrow particle size distribution | |
| Experimental Example 16 | | | | | 1 | 14.99 | 12-20nm, narrow particle size distribution | |
| Experimental Example 17 | | | | | 5 | 8.90 | 12-20nm, narrow particle size distribution | Some grown particles were found. |
| Experimental Example 18 | | | | | 10 | 6.89 | Mostly 12-20nm, narrow particle size distribution | Some grown particles were also present. |
| Experimental Example 19 | | | | | 20 | 5.53 | Mostly 12-20nm, narrow particle size distribution | A large number of grown particles were also present |
| Experimental Example 20 | | | | | 30 | 4.57 | Mostly 12-20nm, narrow particle size distribution | A large number of particles were also present. |

As can be seen in the results of Table 4 above, as the yield of the nanoparticles was increased as the frequency (f) of AC power became lower. Also, as the frequency became higher, the size of the particles was increased, grown particles appeared, and the particle size distribution became wider.

Also, it was shown that the frequency (f) of AC power was preferably 10 Hz or less, and more preferably $0.1 \leq f \leq 5$ Hz. Furthermore, the most preferred frequency was $0.1 \leq f \leq 1$ Hz in view of yield, particle size distribution and the growth of particles.

Meanwhile, Japanese Patent Laid-Open Publication No. Hei 4-157193 discloses that the frequency of an alternating current is generally 2-120 Hz, and preferably 10-80 Hz., and also that if the frequency is lower than 2 Hz or higher than 120 Hz, the efficiency of production of metal ultrafine particles is insufficient.

However, the disclosure of Japanese Patent Laid-Open Publication No. Hei 4-157193 that the preferred frequency range is 10-80 Hz is contrary to the results of the present invention that the yield of nanoparticles is the highest when the frequency is lower than 10 Hz, particularly lower than 2 Hz. This is because the amounts of electrolyte, reducing agent and dispersing agent added to the reaction solution, and the conditions for adding such additives, differ between the present invention and Japanese Patent Laid-Open Publication No. Hei 4-157193.

Although the use of the silver (Ag) metal having a low ionization tendency as the material of the electrodes has been described by way of example in the above Examples, the use of not only metals having a high ionization tendency, for example, Mg, Al, Zn, Fe and Cu, but also metals having a low ionization tendency, such as Pt and Au will show results similar to those obtained in the use of the silver metal.

Also, although the use of the electrodes of pure silver (Ag) has been described in the above Examples, the use of electrodes made of an alloy of two or more selected from the group consisting of Ag, Pt, Au, Mg, Al, Zn, Fe, Cu, Ni, and Pd, for example, alloy electrodes made of Ag-Cu, Ag-Mg, Ag-Al, Ag-Ni, Ag-Fe, Cu-Mg, Cu-Fe, Cu-Al, Cu-Zn, or Cu-Ni, can provide alloy nanoparticles.

Furthermore, alloy nanoparticles have a melting point lower than that of each metal of the alloy, and thus when the alloy nanoparticle are used to manufacture ink, low sintering temperatures can be expected.

According to the present invention, metal nanoparticles, particularly silver nanoparticles, can be uniformly produced in large amounts by a simple process in an environmentally friendly manner, and thus can be used in a wide range of applications, including medical devices, clothing, cosmetics, catalysts, electrode materials and electronic materials. Particularly, the metal nanoparticles are suitable as conductive ink materials which are used to form conductive patterns on insulation films or insulation substrates.

As described above, according to the present invention, when metal nanoparticles are synthesized by alternating current electrolysis, the yield of metal nanoparticles can be greatly improved by maintaining the concentrations of a reducing agent and a dispersing agent at constant levels in proportion to the intensity of an electric current.

Also, according to the present invention, metal nanoparticles having a uniform shape and size can be produced in large amounts in an environmentally friendly manner using electrolysis.

Furthermore, according to the present invention, metal nanoparticles having a uniform shape, a desired size and a uniform particle size distribution can be produced in a high yield by controlling the concentrations of a dispersing agent and a reducing agent in the specific frequency range of AC power.

In addition, according to the present invention, metal nanoparticles capped at the surface with a polymeric dispersing agent can be synthesized at high concentration. The synthesized, surface-capped nanoparticles can be easily dissolved in a solvent to prepare dispersion-type ink and show long-term dispersion stability in the prepared ink.

Although the preferred embodiments of the present invention have been described for illustrative purposes, those skilled in the art will appreciate that various modifications, additions and substitutions are possible, without departing from the scope and spirit of the invention as disclosed in the accompanying claims.

**Claims**

**1.** A method for preparing metal nanoparticles using electrolysis, the method comprising the steps of:

dissolving an electrolyte and a dispersing agent in pure water in a reactor to prepare an electrolytic solution;
placing first and second electrodes apart from each other in the electrolytic solution in the reactor, the electrodes being made of the same material as metal nanoparticles to be obtained;
applying alternating current at the first and second electrodes to ionize the metal of the first and second electrodes in the electrolytic solution; and
introducing into the electrolytic solution a reducing agent,
wherein the amount of reducing agent introduced is set at (integral value of intensity (A) of electric current) x 2 mmol/h to (integral value of intensity (A) of electric current) x 4 mmol/h, based on 1 liter of pure water, thereby obtaining metal nanoparticles.

2. The method of claim 1, wherein the first and second electrodes are made of one or an alloy of two or more selected from the group consisting of Ag, Pt, Au, Mg, Al, Zn, Fe, Cu, Ni, and Pd.

3. The method of claim 1, wherein the amount of dispersing agent introduced is set at (integral value of intensity (A) of electric current x (1.0) x reaction time to (integral value of intensity (A) of electric current) x (1.5) x reaction time, based on 1 liter of pure water.

4. The method of claim 1, wherein the electrolytic solution contains a mixture of an acidic electrolyte and a basic electrolyte and is set at a pH of 7-9.

5. The method of claim 1, wherein the frequency (f) of a power supply for applying the alternating current is 0<f<10 Hz.

6. The method of claim 5, wherein the frequency (f) of the power supply is 0.1≤f≤5 Hz.

7. The method of claim 1, wherein the reducing agent is one or more selected from the group consisting of hydrazine ($N_2H_4$), sodium hypophosphite ($NaH_2PO_2$), sodium borohydride ($NaBH_4$), dimethylamine borane (DMAB; $(CH_3)_2NHBH_3$), formaldehyde (HCHO), and ascorbic acid.

8. The method of claim 1, wherein the electrolyte is one or more selected from the group consisting of nitric acid, formic acid, acetic acid, citric acid, tartaric acid, glutaric acid, hexanoic acid, alkali metal salts of said acids, amines, including ammonia ($NH_3$), triethyl amine (TEA) and pyridine, and amino acids.

9. The method of claim 4, wherein the electrolyte is a mixture of citric acid and hydrazine.

10. The method of claim 1, wherein the dispersing agent is a water-soluble polymeric dispersing agent or a water-dispersible polymeric dispersing agent.

11. An apparatus for preparing metal nanoparticles using electrolyte, the apparatus comprising:

   a reactor in which an electrolytic solution is received;
   first and second electrodes which are placed apart from each other and made of the same material as metal nanoparticles to be obtained;
   a power supply for applying alternating current at the first and second electrodes so as to perform an electrolytic reaction; and
   a reducing agent supply means serving to introduce a reducing agent into the electrolytic solution so as to maintain the concentration of the reducing agent at a constant level according to the concentration of metal ions produced when the electrolytic reaction is performed by applying the alternating current.

12. The apparatus of claim 11, wherein the amount of reducing agent introduced is set at (integral value of intensity (A) of electric current) x 2 mmol/h to (integral value of intensity (A) of electric current) x 4 mmol/h, based on 1 liter of pure water.

13. The apparatus of claim 11, wherein the frequency (f) of the power supply is 0<f<10 Hz, preferably 0.1≤f≤1 Hz.

14. The apparatus of claim 11, wherein the electrolytic solution is a solution of an electrolyte and a dispersing agent in pure water and is set at a pH of 7-9, in which the electrolyte is a mixture of an acidic electrolyte and a basic electrolyte.

**Patentansprüche**

1. Verfahren zur Herstellung von Metallnanopartikeln unter Verwendung von Elektrolyse, wobei das Verfahren die Schritte aufweist:

   Lösen eines Elektrolyten und eines Dispergiermittels in reinem Wasser in einem Reaktor zur Herstellung einer Elektrolytlösung;
   Platzieren einer ersten und einer zweiten Elektrode im Abstand voneinander in der Elektrolytlösung in dem Reaktor, wobei die Elektroden aus dem gleichen Material wie die zu erhaltenden Metallnanopartikel hergestellt sind;

Anlegen von Wechselstrom an die erste und die zweite Elektrode zum Ionisieren des Metalls der ersten und der zweiten Elektrode in der Elektrolytlösung; und

Einführen eines Reduktionsmittels in die Elektrolytlösung,

wobei die Menge an eingeführtem Reduktionsmittel auf (Integralwert der Stärke (A) des elektrischen Stroms) x 2 mmol/h bis (Integralwert der Stärke (A) des elektrischen Stroms) x 4 mmol/h auf der Basis von 1 Liter reinem Wasser gesetzt ist,

dadurch Erhalten von Metallnanopartikeln.

2. Verfahren nach Anspruch 1, bei dem die erste und die zweite Elektrode aus einem oder einer Legierung von zwei oder mehr hergestellt sind, die aus der Gruppe bestehend aus Ag, Pt, Au, Mg, Al, Zn, Fe, Cu, Ni und Pd ausgewählt sind.

3. Verfahren nach Anspruch 1, bei dem die Menge an eingeführtem Dispergiermittel auf (Integralwert der Stärke (A) des elektrischen Stroms) x (1,0) x Reaktionszeit bis (Integralwert der Stärke (A) des elektrischen Stroms) x (1,5) x Reaktionszeit auf der Basis von 1 Liter reinem Wasser gesetzt ist,

4. Verfahren nach Anspruch 1, bei dem die Elektrolytlösung eine Mischung eines sauren Elektrolyten und eines basischen Elektrolyten enthält und auf einen pH-Wert von 7-9 gesetzt ist.

5. Verfahren nach Anspruch 1, bei dem die Frequenz (f) einer Stromversorgung zum Anlegen des Wechselstroms $0 < f < 10$ Hz beträgt.

6. Verfahren nach Anspruch 5, bei dem die Frequenz (f) der Stromversorgung $0,1 \leq f \leq 5$ Hz beträgt.

7. Verfahren nach Anspruch 1, bei dem das Reduktionsmittel eines oder mehrere ist, die aus der Gruppe bestehend aus Hydrazin ($N_2H_4$), Natriumhypophosphit ($NaH_2PO_2$), Natriumborhydrid ($NaBH_4$), Dimethylaminoboran (DMAB; $(CH_3)_2NHBH_3$), Formaldehyd (HCHO) und Ascorbinsäure ausgewählt sind.

8. Verfahren nach Anspruch 1, bei dem der Elektrolyt einer oder mehrere ist, die aus der Gruppe bestehend aus Salpetersäure, Ameisensäure, Essigsäure, Zitronensäure, Weinsäure, Glutarsäure, Hexansäure, Alkalimetallsalze der genannten Säuren, Amine, einschließlich Ammoniak ($NH_3$), Triethylamin (TEA) und Pyridin, und Aminosäuren ausgewählt sind.

9. Verfahren nach Anspruch 4, bei dem der Elektrolyt eine Mischung aus Zitronensäure und Hydrazin ist.

10. Verfahren nach Anspruch 1, bei dem das Dispergiermittel ein wasserlösliches polymeres Dispergiermittel oder ein wasserdispergierbares polymeres Dispergiermittel ist.

11. Vorrichtung zur Herstellung von Metallnanopartikeln unter Verwendung eines Elektrolyten, wobei die Vorrichtung umfasst:

einen Reaktor, in dem eine Elektrolytlösung aufgenommen ist,

eine erste und eine zweite Elektrode, die im Abstand voneinander platziert und aus dem gleichen Material wie die zu erhaltenden Metallnanopartikel hergestellt sind;

eine Stromversorgung zum Anlegen von Wechselstrom an die erste und die zweite Elektrode zur Durchführung einer elektrolytischen Reaktion; und

eine Reduktionsmittelzufuhreinrichtung, die zum Einführen eines Reduktionsmittels in die Elektrolytlösung dient, um die Konzentration des Reduktionsmittels auf einem konstanten Niveau gemäß der Konzentration von Metallionen zu halten, die hergestellt werden, wenn die elektrolytische Reaktion durch Anlegen des Wechselstroms ausgeführt wird.

12. Vorrichtung nach Anspruch 11, bei der die Menge an eingeführtem Reduktionsmittel auf (Integralwert der Stärke (A) des elektrischen Stroms) x 2 mmol/h bis (Integralwert der Stärke (A) des elektrischen Stroms) x 4 mmol/h auf der Basis von 1 Liter reinem Wasser gesetzt ist.

13. Vorrichtung nach Anspruch 11, bei der die Frequenz (f) der Stromversorgung $0 < f < 10$ Hz, vorzugsweise $0,1 \leq f \leq 1$ Hz beträgt.

**14.** Vorrichtung nach Anspruch 11, bei der die Elektrolytlösung eine Lösung eines Elektrolyten und eines Dispergiermittels in reinem Wasser ist und auf einen pH-Wert von 7-9 gesetzt ist, wobei der Elektrolyt eine Mischung aus einem sauren Elektrolyten und einem basischen Elektrolyten ist.

**Revendications**

**1.** Procédé de préparation de nanoparticules de métal au moyen d'une électrolyse, le procédé comprenant les étapes suivantes :

la dissolution d'un électrolyte et d'un agent dispersant dans de l'eau pure dans un réacteur de façon à préparer une solution électrolytique,
le placement d'une première et d'une deuxième électrodes espacées l'une de l'autre dans la solution électrolytique dans le réacteur, les électrodes étant composées du même matériau que les nanoparticules de métal à obtenir,
l'application d'un courant alternatif au niveau des première et deuxième électrodes de façon à ioniser le métal des première et deuxième électrodes dans la solution électrolytique, et
l'introduction dans la solution électrolytique d'un agent de réduction,
la quantité d'agent de réduction introduite étant réglée sur (valeur d'intensité intégrale (A) de courant électrique) x 2 mmol/h à (valeur d'intensité intégrale (A) de courant électrique) x 4 mmol/h, pour 1 litre d'eau pure,
afin d'obtenir ainsi des nanoparticules de métal.

**2.** Procédé selon la revendication 1, dans lequel les première et deuxième électrodes sont composées d'un élément ou d'un alliage de deux ou plus éléments sélectionnés dans le groupe constitué de Ag, Pt, Au, Mg, Al, Zn, Fe, Cu, Ni et Pd.

**3.** Procédé selon la revendication 1, dans lequel la quantité d'agent dispersant introduite est réglée sur (valeur d'intensité intégrale (A) de courant électrique x (1,0) x temps de réaction à (valeur d'intensité intégrale (A) de courant électrique) x (1,5) x temps de réaction, pour 1 litre d'eau pure.

**4.** Procédé selon la revendication 1, dans lequel la solution électrolytique contient un mélange d'un électrolyte acide et d'un électrolyte basique et est réglée sur un pH de 7 à 9.

**5.** Procédé selon la revendication 1, dans lequel la fréquence (f) d'une alimentation électrique destinée à l'application du courant alternatif est de $0 < f < 10$ Hz.

**6.** Procédé selon la revendication 5, dans lequel la fréquence (f) de l'alimentation électrique est de $0,1 \leq f \leq 5$ Hz.

**7.** Procédé selon la revendication 1, dans lequel l'agent de réduction est un ou plusieurs éléments sélectionnés dans le groupe constitué de hydrazine ($N_2H_4$), hypophosphite de sodium ($NaH_2PO_2$), borohydrure de sodium ($NaBH_4$), borane de diméthylamine (DMAB, $(CH_3)_2NHBH_3$), formaldéhyde (HCHO) et acide ascorbique.

**8.** Procédé selon la revendication 1, dans lequel l'électrolyte est un ou plusieurs éléments sélectionnés dans le groupe constitué d'acide nitrique, d'acide formique, d'acide acétique, d'acide citrique, d'acide tartrique, d'acide glutarique, d'acide hexanoïque, de sels de métaux alcalins desdits acides, d'amines, y compris ammoniac ($NH_3$), triéthylamine (TEA) et pyridine, et des acides aminés.

**9.** Procédé selon la revendication 4, dans lequel l'électrolyte est un mélange d'acide citrique et d'hydrazine.

**10.** Procédé selon la revendication 1, dans lequel l'agent dispersant est un agent dispersant polymère soluble dans l'eau ou un agent dispersant polymère hydrodispersable.

**11.** Appareil de préparation de nanoparticules de métal au moyen d'un électrolyte, l'appareil comprenant :

un réacteur dans lequel une solution électrolytique est reçue,
une première et une deuxième électrodes qui sont espacées l'une de l'autre et composées du même matériau que les nanoparticules de métal à obtenir,
une alimentation électrique destinée à l'application d'un courant alternatif au niveau des première et deuxième électrodes de façon à exécuter une réaction électrolytique, et

un moyen d'apport d'un agent de réduction servant à introduire un agent de réduction dans la solution électrolytique de façon à maintenir la concentration de l'agent de réduction à un niveau constant en fonction de la concentration d'ions métalliques produits lorsque la réaction électrolytique est exécutée par l'application du courant alternatif.

12. Appareil selon la revendication 11, dans lequel la quantité d'agent de réduction introduite est réglée sur (valeur d'intensité intégrale (A) de courant électrique) x 2 mmol/h à (valeur d'intensité intégrale (A) de courant électrique) x 4 mmol/h, pour 1 litre d'eau pure.

13. Appareil selon la revendication 11, dans lequel la fréquence (f) de l'alimentation électrique est $0 < f < 10$ Hz, de préférence $0,1 \leq f \leq 1$ Hz.

14. Appareil selon la revendication 11, dans lequel la solution électrolytique est une solution d'un électrolyte et d'un agent dispersant dans de l'eau pure et est réglée à un pH de 7 à 9, l'électrolyte étant un mélange d'un électrolyte acide et d'un électrolyte basique.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102006120716
- JP HEI4157193 B

- KR 100820038
- WO 2008111735 A1